# EUROPÄISCHE PATENTSCHRIFT

(11) **EP 3 307 601 B1**
(45) Veröffentlichungstag und Bekanntmachung des Hinweises auf die Patenterteilung: **08.01.2020**
(21) Anmeldenummer: 16736374.6
(22) Anmeldetag: 08.06.2016
(51) Int. Cl.: B61D 43/00, H02K 7/18

(54) **GENERATORSYSTEM FÜR SCHIENENFAHRZEUGE**
GENERATOR SYSTEM FOR RAIL VEHICLES
SYSTÈME DE GÉNÉRATEUR POUR VÉHICULES FERROVIAIRES

(30) Priorität: 12.06.2015 DE 102015210773
(43) Veröffentlichungstag der Anmeldung: 18.04.2018
(73) Patentinhaber: Schaeffler Technologies AG & Co. KG, 91074 Herzogenaurach (DE)
(72) Erfinder: STITZINGER, Rupert, 97424 Schweinfurt (DE); MARQUARDT, Christoph, 97493 Bergrheinfeld (DE); SEYBOLD, Alexander, 97483 Eltmann (DE)
(86) Internationale Anmeldenummer: PCT/DE2016/200264
(87) Internationale Veröffentlichungsnummer: WO 2016/198068

(56) Entgegenhaltungen:
- DE-A1- 3 933 640
- DE-C- 604 126
- US-A- 381 915
- US-A- 469 799

## Beschreibung

Die Erfindung betrifft ein Generatorsystem für Schienenfahrzeuge, umfassend einen Generator mit einem Rotor und einem Stator, sowie eine Radsatzlagereinheit, wobei die Radsatzlagereinheit ein Lager zur Lagerung einer Radsatzwelle sowie ein Lagergehäuse umfasst, wobei an der Stirnseite der Radsatzwelle eine Endkappe angeordnet ist und eine drehfeste Verbindung zwischen Endkappe und Radsatzwelle vorgesehen ist, wobei der Stator mit dem Lagergehäuse verbunden ist, und wobei an der Außenumfangsfläche der Endkappe ein Reibrad angeordnet ist, wobei das Reibrad als Rotor des Generators ausgebildet ist.

In der DE 39 33 640 C2 ist eine elektrische Energieversorgungseinrichtung für einen schienengebundenen Zugverband offenbart, wobei die Energieversorgungseinrichtung zusammen mit einer Kuppelstange zwischen zwei aufeinander folgende Wagen des Zugverbands eingliederbar und durch eine an einer Kuppelstange umgreifende Halterung an der Kuppelstange befestigt ist. Die Energieversorgungseinrichtung weist einen Generator auf, der unmittelbar unter Zwischenschaltung entsprechender Übertragungselemente von einem an der Schiene laufenden Antriebsrad angetrieben wird.

Weitere Beispiele für Generatorsysteme für Schienenfahrzeuge mit Reibradantrieben sind in der US 5,828,135 und in der GB 1903 0 3620 angedeutet.

Die US 469 799 A offenbart einen Elektromotor für eine elektrische Lokomotive, der Reibräder aufweist, die in Reibkontakt zu den Rädern der Lokomotive stehen.

Um eine der genannten Energieversorgungseinrichtungen an eine typische und gewöhnliche Radsatzlagereinheit zu koppeln, müsste ein großer konstruktiver Aufwand getätigt werden.

Aufgabe der vorliegenden Erfindung ist demnach, ein kostengünstiges und einfaches Generatorsystem für Schienenfahrzeuge zu offenbaren, welches ohne großen konstruktiven Änderungsaufwand leicht an jegliche Radsatzlagereinheiten adaptiert werden kann.

Zur Lösung der erfindungsgemäßen Aufgabe wird das im Anspruch 1 angegebene Generatorsystem vorgeschlagen. Optionale vorteilhafte Ausgestaltungen der Erfindung ergeben sich ganz oder teilweise aus den abhängigen Ansprüchen.

Das erfindungsgemäße Generatorsystem umfassend einen Generator, mit einem Rotor und einem Stator, sowie eine Radsatzlagereinheit, wobei die Radsatzlagereinheit ein Lager zur Lagerung einer Radsatzwelle sowie ein Lagergehäuse umfasst, wobei an der Stirnseite der Radsatzwelle eine Endkappe angeordnet werden kann und eine drehfeste Verbindung zwischen Endkappe und Radsatzwelle vorgesehen ist, wobei der Stator mit dem Lagergehäuse verbunden ist, und wobei an der Außenumfangsfläche der Endkappe ein Reibrad angeordnet ist, wobei das Reibrad als Rotor des Generators ausgebildet ist, zeichnet sich dadurch aus, dass das Lagergehäuse das Lager teilweise umschließt. Der Rotor kann beispielsweise als Hülse ausgebildet sein oder eine U-Form aufweisen. Vorzugsweise wird das Reibrad per Federkraft an die Endkappe angedrückt.

Es gibt mehrere Ausführungsmöglichkeiten ein nahezu schlupffreies Antreiben des Rotors und somit des Generators zu erreichen. Zum Beispiel können die Endkappe und das Reibrad an ihren Außenumfangsflächen eine zueinander korrespondierende Profilierung aufweisen. Unter Profilierung wird eine Formgebung der Oberfläche mittels einer Struktur, so dass die Oberfläche im Querschnitt entsprechend ausgestaltete Erhebungen und Vertiefungen aufweist, verstanden. Die Strukturen können regelmäßig oder unregelmäßig ausgebildet sein. Es ist jedoch auch denkbar, dass nur das Reibrad, das heißt der Rotor, oder nur die Endkappe an der jeweiligen Außenumfangsfläche eine Profilierung aufweist.

Eine weitere Ausführungsmöglichkeit stellt die Beschichtung der Endkappe dar. Hierzu ist die Außenumfangsfläche der Endkappe vorzugsweise mit einem, insbesondere groben, sandartigen Material beschichtet, wodurch ebenfalls eine Profilierung entsteht.

Die Außenumfangsfläche der Endkappe kann jedoch beispielsweise eine, insbesondere weiche, elastische Gummioberfläche aufweisen. Das bedeutet, dass auch die Wahl des Werkstoffs eine Ausführungsmöglichkeit darstellt, die Einfluss auf das Antreiben des Rotors hat.

Es ist erfindungsgemäß vorgesehen, dass das Lagergehäuse das Lager teilweise umschließt. Das bedeutet, dass das Lagergehäuse das Lager nicht vollumfänglich umgibt und somit kein geschlossenes Lagergehäuse vorhanden ist. Vorzugsweise umschließt das Lagergehäuse weniger als 50% des Lagers. Das Lagergehäuse ist beispielsweise als Adapter ausgebildet.

Es ist des Weiteren vorteilhaft, wenn in dem Lagergehäuse ein zweireihiges Wälzlager angeordnet ist. Vorzugsweise handelt es sich um ein zweireihiges Kegelrollenlager in O-Anordnung. Beispielsweise können aber auch Zylinderrollenlager oder Pendelrollenlager verwendet werden. Das Wälzlager kann auf der Radsatzwelle mittels einer Pressverbindung angeordnet sein. Die Radsatzwelle kann als Voll- oder als Hohlwelle ausgebildet sein.

Des Weiteren ist es zweckmäßig, wenn der Generator eine Drehachse aufweist, die radial innerhalb der Kontur des Lagergehäuses angeordnet ist. Das bedeutet, dass maximal 45% des Generators über die Kontur des Lagergehäuses herausragt.

Der durch den Generator erzeugte Strom kann beispielsweise für eine Messeinrichtung, um die Funktionsfähigkeit der Wälzlager zu überprüfen, verwendet werden.

Weitere Einzelheiten, Merkmale, Merkmalskombinationen und Wirkungen auf der Basis der Erfindung ergeben sich aus der nachfolgenden Beschreibung einer bevorzugten, beispielhaften Ausführungsform der Erfindung sowie aus den Zeichnungen. Diese zeigen in:

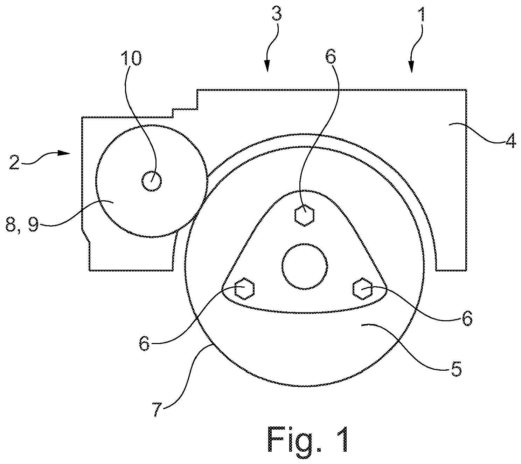

- Figur 1: eine Ausführungsform eines erfindungsgemäßen Generatorsystems.

In der **Fig. 1** ist eine Ausführungsform eines Generatorsystems 1 in Frontansicht schematisch dargestellt. Das Generatorsystem **1** umfasst einen Generator **2** und eine Radsatzlagereinheit **3.** Die Radsatzlagereinheit **3** umfasst dabei ein Wälzlager zur Lagerung einer Radsatzwelle, wobei das Wälzlager und die Radsatzwelle nicht dargestellt sind.

Das Wälzlager umfasst einen Innenring sowie einen Außenring und dazwischen angeordnete Wälzkörper. Auf dem Außenring des Wälzlagers ist ein Lagergehäuse **4** angeordnet, das nicht geschlossen ist und das Wälzlager nur teilweise umschließt. Das Lagergehäuse **4** stellt einen Adapter dar, der mit dem Schienenfahrzeug verbunden werden kann.

An der Stirnseite der nicht dargestellten Radsatzwelle ist eine Endkappe **5** angeordnet. Die Endkappe **5** ist mittels drei Verbindungselementen **6** mit der Radsatzwelle drehfest verbunden. An der Außenumfangsfläche **7** der Endkappe **5** liegt ein Reibrad **8** an, wobei das Reibrad **8** als Rotor **9** des Generators **2** ausgebildet ist. Das bedeutet, dass das Reibrad **8** auf der Außenumfangsfläche **7** der Endkappe **5** abrollt. Der Rotor **9** beziehungsweise das Reibrad **8** werden somit durch die Drehbewegung der Radsatzwelle angetrieben, wodurch Strom im Generator **2** erzeugt wird. Der Rotor **9** ist des Weiteren als Hülse ausgebildet.

Der Generator **2** umfasst den bereits beschriebenen Rotor **9** sowie einen Stator **10.** Der Rotor **9** ist mittels einer nicht dargestellten Rotorlagerung auf dem Stator **10** gelagert. Die Rotorlagerung ist vorzugsweise als Wälzlager, insbesondere als Rollenlager, ausgebildet. Des Weiteren ist der Stator **10** an dem feststehenden Lagergehäuse **4** befestigt.

## Patentansprüche

1. Generatorsystem (1) für Schienenfahrzeuge, umfassend einen Generator (2), mit einem Rotor (9) und einem Stator (10), sowie eine Radsatzlagereinheit (3), wobei die Radsatzlagereinheit (3) ein Lager zur Lagerung einer Radsatzwelle sowie ein Lagergehäuse (4) umfasst, wobei an der Stirnseite der Radsatzwelle eine Endkappe (5) angeordnet werden kann und eine drehfeste Verbindung zwischen Endkappe (5) und Radsatzwelle vorgesehen ist, wobei der Stator (10) mit dem Lagergehäuse (4) verbunden ist, und wobei an der Außenumfangsfläche (7) der Endkappe (5) ein Reibrad (8) angeordnet ist, wobei das Reibrad (8) als Rotor (9) des Generators (2) ausgebildet ist, **dadurch gekennzeichnet, dass** das Lagergehäuse (4) das Lager teilweise umschließt.

2. Generatorsystem (1) nach Anspruch 1, **dadurch gekennzeichnet, dass** die Endkappe (5) und das Reibrad (8) an ihren Außenumfangsflächen (7) eine zueinander korrespondierende Profilierung aufweisen.

3. Generatorsystem (1) nach einem der vorangehenden Ansprüche, **dadurch gekennzeichnet, dass** die Außenumfangsfläche (7) der Endkappe (5) mit einem sandartigen Material beschichtet ist.

4. Generatorsystem (1) nach einem der vorangehenden Ansprüche, **dadurch gekennzeichnet, dass** die Außenumfangsfläche (7) der Endkappe (5) eine elastische Gummioberfläche aufweist.

5. Generatorsystem (1) nach einem der vorangehenden Ansprüche, **dadurch gekennzeichnet, dass** in dem Lagergehäuse (4) ein zweireihiges Wälzlager angeordnet ist.

6. Generatorsystem (1) nach einem der vorangehenden Ansprüche, **dadurch gekennzeichnet, dass** der Generator (2) eine Drehachse aufweist, die radial innerhalb der Kontur des Lagergehäuses (4) angeordnet ist.

## Claims

1. A generator system (1) for rail vehicles, comprising a generator (2), having a rotor (9) and a stator (10), and a wheelset bearing unit (3), wherein the wheelset bearing unit (3) comprises a bearing for supporting a wheelset shaft and a bearing housing (4), wherein an end cap (5) can be arranged on the front side of the wheelset shaft and a rotationally fixed connection is provided between the end cap (5) and the wheelset shaft, wherein the stator (10) is connected to the bearing housing (4), and wherein a friction wheel (8) is arranged on the outer circumferential surface (7) of the end cap (5), wherein the friction wheel (8) is designed as a rotor (9) of the generator (2), **characterised in that** the bearing housing (4) partially surrounds the bearing.

2. The generator system (1) according to claim 1, **characterised in that** the end cap (5) and the friction wheel (8) have on their outer circumferential surfaces (7) a mutually corresponding profiling.

3. The generator system (1) according to one of the preceding claims, **characterised in that** the outer circumferential surface (7) of the end cap (5) is coated with a sand-like material.

4. The generator system (1) according to one of the preceding claims, **characterised in that** the outer circumferential surface (7) of the end cap (5) has an elastic rubber surface.

5. The generator system (1) according to one of the preceding claims, **characterised in that** a two-rowed rolling bearing is arranged in the bearing housing (4).

6. The generator system (1) according to one of the preceding claims, **characterised in that** the generator (2) has an axis of rotation which is arranged radially within the contour of the bearing housing (4).

## Revendications

1. Système de générateur (1) pour véhicules ferroviaires doté d'un générateur (2) comprenant un rotor (9) et un stator (10), et d'une unité de support d'essieu monté (3), l'unité de support d'essieu monté (3) comprenant un palier destiné à supporter un arbre d'essieu monté et un boîtier de palier (4), un capuchon terminal (5) pouvant être disposé sur la face frontale de l'arbre d'essieu monté et une liaison solidaire en rotation étant réalisée entre le capuchon terminal (5) et l'arbre d'essieu monté, le stator (10) étant relié au boîtier de palier (4), et sur la surface périphérique extérieure (7) du capuchon terminal (5) étant disposée une roue de friction (8), la roue de friction (8) étant réalisée sous la forme du rotor (9) du générateur (2), **caractérisé en ce que** le boîtier de palier (4) enserre partiellement le palier.

2. Système de générateur (1) selon la revendication 1, **caractérisé en ce que** le capuchon terminal (5) et la roue de friction (8) sur leurs surfaces périphériques extérieures (7) ont un profil correspondant.

3. Système de générateur (1) selon l'une quelconque des revendications précédentes, **caractérisé en ce que** la surface périphérique extérieure (7) du capuchon terminal (5) est revêtue d'un matériau sableux.

4. Système de générateur (1) selon l'une quelconque des revendications précédentes, **caractérisé en ce que** la surface périphérique extérieure (7) du capuchon terminal (5) présente une surface en caoutchouc élastique.

5. Système de générateur (1) selon l'une quelconque des revendications précédentes, **caractérisé en ce que** dans le boîtier de palier (4) est disposé un palier à roulement à deux rangées.

6. Système de générateur (1) selon l'une quelconque des revendications précédentes, **caractérisé en ce que** le générateur (2) présente un axe de rotation placé radialement sur le contour du boîtier de palier (4).
